Europäisches Patentamt

**European Patent Office**

Office européen des brevets

(11) Numéro de publication: **0 234 168**
**B1**

(12) **FASCICULE DE BREVET EUROPEEN**

(45) Date de publication du fascicule du brevet:
**06.09.89**

(21) Numéro de dépôt: **86420291.6**

(22) Date de dépôt: **25.11.86**

(51) Int. Cl.⁴: **B 65 D 63/10,** B 65 B 25/22,
B 65 B 29/08, D 01 F 6/76,
D 01 F 6/94, C 08 L 83/04

(54) **Procédé pour emballer des produits alimentaires à cuire par un fil en élastomère de silicone.**

(30) Priorité: **06.12.85 FR 8518287**

(43) Date de publication de la demande:
**02.09.87 Bulletin 87/36**

(45) Mention de la délivrance du brevet:
**06.09.89 Bulletin 89/36**

(84) Etats contractants désignés:
**AT BE CH DE ES FR GB GR IT LI LU NL SE**

(56) Documents cités:
**DE-A- 1 965 440**
**FR-A- 1 316 978**
**FR-A- 2 068 852**
**FR-A- 2 150 278**
**FR-A- 2 164 061**
**FR-E- 64 459**
**US-A- 3 307 956**

(73) Titulaire: **RHONE-POULENC CHIMIE, 25, quai Paul Doumer, F-92408 Courbevoie Cédex (FR)**

(72) Inventeur: **Lagarde, Robert, 5, rue des Lilas, F-69320 Feyzin (FR)**
Inventeur: **Ariagno, Daniel, 15, Résidence de la Voie Romaine, F-69290 Craponne (FR)**
Inventeur: **Nys, Jacques, Résidence Maillot 4, Square Pergolès, F-78150 Le Chesnay (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

## Description

Certains produits alimentaires en particulier les pièces de viandes telles que rôtis et volailles éventuellement désossées doivent être ficelées avant cuisson par un fil ou ficelle que l'on dispose manuellement ou au moyen d'une machine automatique. Dans ce dernier cas le fil est souvent préalablement tricoté sous forme d'un filet.

Le fil constitutif du filet doit présenter un certain nombre de propriétés pour être utilisable dans les machines automatiques:

- il doit être suffisamment élastique, à température ambiante et à chaud, pour pouvoir s'adapter aux différents gabarits des pièces à emballer et maintenir, à froid et à chaud, par compression les différents morceaux de viandes constitutifs de ces pièces, en particulier dans le cas des volailles désossées.

- il doit présenter des propriétés physiques à froid et à chaud suffisantes pour résister aux contraintes pouvant apparaître lors du tricotage du filet, lors du passage dans la machine automatique d'emballage et lors de la cuisson, et, en particulier, un tel fil doit présenter des résistances au déchirement, au cisaillement, à la rupture et à l'allongement suffisants.

- il doit satisfaire aux normes réglementaires visant les produits au contact des aliments.

- il doit être insensible, à froid et à chaud, aux U.V., à l'oxygène, à l'ozone, aux micro-ondes et aux graisses animales et végétales.

- il doit pouvoir éventuellement être transparent et incolore et le rester après cuisson pour des raisons esthétiques de présentation.

- il doit surtout présenter une bonne résistance à la chaleur au moins jusqu'à 250°C, température maximale de la plupart des fours de cuisson alimentaire et présenter après cuisson un aspect satisfaisant et ne pas coller à la viande. En outre dans le cas où le fil a été surchauffé il faut que les produits de dégradation du fil ne soient pas toxiques lors de leur ingestion par l'organisme humain.

On a déjà proposé dans l'art antérieur des fils ou ficelles pour pièces de viandes à rôtir. Ainsi on utilise depuis longtemps de la ficelle issue de fibres végétales qui présente l'inconvénient majeur de ne pas être élastique et, par conséquent, de cisailler la viande et, surtout de ne pas pouvoir être utilisée sous forme de fils et de filets dans les machines automatiques d'emballage.

On a remplacé dans les installations industrielles la ficelle par un fil latex de caoutchouc naturel ou synthétique hydrocarboné.

Cependant un tel fil se dégrade à la chaleur à partir de 70°C, perd son élasticité et ses caractéristiques mécaniques et les fumées provenant de sa dégradation irritent très fortement la gorge et les voies respiratoires et peuvent présenter une certaine toxicité. Par ailleurs ces fils n'ayant pas l'aspect et le toucher textile, et de plus les filets réalisés à partir de ces fils n'ayant pas une cohésion et une résistance suffisante à l'allongement on a proposé de guiper ces fils dans un fil polyamide.

Ce guipage apporte certes la cohésion et la résistance à l'allongement mais c'est une opération très coûteuse et, de plus, ce fil polyamide présente un très mauvais aspect après cuisson, colle à la viande et se dégrade en produits pouvant être toxiques.

Il existe donc un besoin de proposer un emballage pour produits alimentaires à cuire constitué par un lien, en particulier un fil ou un crin et qui ne présente pas les incovénients des matières constitutives des fils connus, mais qui présente l'ensemble des propriétés physico-chimiques énumérées ci-dessus.

La présente invention concerne un emballage pour produits alimentaires à cuire, caractérisé en ce que la matière constitutive est en élastomère de silicone, ainsi qu'un procédé pour emballer lesdits produits alimentaires caractérisé en ce qu'on utilise un lien en élastomère silicone obtenu par vulcanisation à chaud d'une composition organopolysiloxane.

L'âme du lien d'élastomère silicone utilisée dans la présente invention est de préférence un fil ou crin extrudé, mais peut également se présenter sous la forme de bandes ou rubans découpés. L'épaisseur du fil ou crin ou bande en élastomère silicone peut varier dans de grandes limites, mais pour l'application visée dans la présente invention elle est avantageusement comprise entre 0,1 et 2 mm, de préférence entre 0,3 et 1 mm, en particulier dans le cas où le fil est mono-brin.

On peut utiliser des fils ou crins élémentaires éventuellement creux ainsi que des fils multi-brins tressés, le nombre de brins étant avantageusement compris entre 2 et 6.

Ces fils peuvent être utilisés tels quels pour enrouler les pièces alimentaires à cuire ou être tricotés en filets utilisables manuellement ou bien ils présentent des formes et des dimensions adaptées aux machines d'emballage de pièces alimentaires. Ces filets peuvent être tricotés à partir de fils ayant des propriétés mécaniques différentes, en particulier certains fils du filet peuvent pratiquement ne pas être élastiques.

Pour fabriquer un fil ou crin par extrusion, on sélectionne une composition organopolysiloxane extrudable; dans le cas où on veut faire des fils, présentant après réticulation et traitement thermique et/ou mécanique les propriétés physico-chimiques désirées, on extrude cette composition à travers un orifice de filière mono-brin ou multi-brins de diamètre voulu et on fait passer le fil extrudé à travers un four tunnel chauffé à une température comprise entre 100 et 850°C en vue de le réticuler.

Selon un procédé préféré de fabrication, la composition de silicone est extrudée dans une extrudeuse verticale ou horizontale et est, de préférence, talquée à la sortie de la filière pour éviter de coller sur la bande transporteuse. Cette bande transporteuse passe dans un four tunnel de vulcanisation, l'atmosphère du four étant située entre 300 et 400°C, ou passe rapidement (en quelques secondes) dans un four porté entre 750 et 850°C. La bande transporteuse peut aussi traverser, à la place de ce four tunnel, un bain de sel fondu, un lit de particules solides fluidisées, ou être exposé à des radiations à haute énergie (U.V. et faiseaux d'électrons). Le fil est ensuite recuit à une température comprise entre 150 et 220°C pendant plusieurs heures, par exemple au moins 3 heures à 180-200°C. Selon ce procédé le fil peut être étiré mais cela n'est pas nécessaire.

La filière peut présenter plusieurs groupes d'orifices d'extrusion en forme de fentes circulaires et la face d'extrusion de la filière, dans ce cas, peut être maintenue en contact avec un liquide non solvant, pas ou peu gonflant, de l'organopolysiloxane utilisé en vue de réaliser un fil multi-brins. Ce solvant peut être avantageusement choisi parmi le diméthylformamide, le diméthylsulfoxyde, et le méthanol comme décrit dans le brevet français FR-A-2 164 061.

De préférence le fil présente une résistance kilométrique à la rupture supérieure à 1, 2 et un allongement à la rupture supérieur à 250%, de préférence supérieur à 400%.

Des compositions organopolysiloxanes durcissables en élastomères convenables et des procédés d'extrusion pour fabriquer des fils utilisables pour l'application visée par la présente invention sont décrits en détail dans les brevets français FR-A-1 017 582, l'addition 64 459 à FR-A-1 017 582, correspondants aux brevets britanniques GB-A-682 540 et 726 479, dans les brevets français FR-A-1 602 332 (correspondant à US-A-3 781 400), FR-A-2 068 852, FR-A-2 102 707 et FR-A-2 164 061 cités comme référence.

L'homme de métier spécialiste des silicones n'aura aucune difficulté à choisir une composition organopolysiloxane et à adapter le traitement thermique et mécanique du fil extrudé en fonction des propriétés physico-chimiques désirées pour l'élastomère constitutif du lien.

Pour l'application visée par la présente invention on choisit de préférence des compositions organopolysiloxanes conduisant à des élastomères à fort caractère élastique, à haute résistance au déchirement et à la rupture compte-tenu de la faible section des liens, en particulier des fils. Parmi ces compositions on peut avantageusement utiliser des compositions organopolysiloxane vulcanisables à chaud comportant au moins une gomme diorganopolysiloxane présentant des radicaux méthyle et vinyle et éventuellement d'autres radicaux de préférence des radicaux trifluoro-3, 3, 3 propyle et/ou phényle, chargée par une silice de pyrogénation éventuellement traitée et d'un système réticulant constitué soit par un peroxyde organique, soit par l'association d'un hydrogénométhylpolysiloxane linéaire ou résineux présentant éventuellement des motifs diméthylsiloxane et d'une quantité catalytiquement efficace d'un catalyseur au platine ou d'un métal de la famille du platine (par exemple Rhodium, Osmium, Ruthenium, Rhenium). Les compositions du type ci-dessus réticulant avec un peroxyde, sont bien connues et sont par exemple décrites dans les brevets américains US-A-3 660 345, 3 652 475 et 4 444 940, cités comme références.

Les compositions du type ci-dessus réticulant au moyen de l'association d'un hydrogénoorganopolysiloxane et d'une quantité catalytiquement efficace d'un catalyseur au platine sont également bien connues et sont par exemple décrites dans les brevets français FR-A-1 360 908, 1 375 869 et 1 582 465 cités comme références.

Dans ce qui suit, sauf indications contraires, les parties et pourcentages sont en poids.

Une composition organopolysiloxane réticulant au peroxyde et convenant plus particulièrement pour l'application visée comporte:

A. - 100 parties d'un mélange de deux gommes méthylpolysiloxane vinylées formé de:

1. - 80 à 95 parties d'une gomme diméthylpolysiloxane bloquée à chacune de ses extrémités par un motif diméthylvinylsiloxy et de viscosité comprise entre 1 000 000 et 50 000 000 de mPa.s à 25°C, jusqu'à 40 % molaire des radicaux méthyle pouvant être remplacés par un radical choisi parmi les radicaux trifluoro-3, 3, 3 propyle et phényle.

2. - 20 à 5 parties d'une gomme diméthylméthylvinylpolysiloxane bloquée à chacune de ses extrémités par un motif triméthylsiloxy, présentant une teneur pondérale en motif vinyle comprise entre 0,5 et 4 % et présentant une viscosité comprise entre 100 000 et 1 000 000 de mPa.s à 25°C, jusqu'à 40 % molaire des radicaux méthyle pouvant être remplacés par des radicaux choisis parmi les radicaux phényle et trifluoro-3, 3, 3 propyle.

B. - 10 à 60 parties d'une silice renforçante choisie parmi les silices de précipitation et les silices de pyrogénation.

C. - 0,1 à 5 parties d'un peroxyde organique.

D. - 0 à 10 parties d'un agent anti-structure qui est une huile diméthylpolysiloxane de viscosité inférieure à 5000 Pa.s à 25°C, formée d'un enchaînement de motifs de formule $(CH_3)_2$ SiO et bloquée à chacune de ses extrémités par un radical hydroxyle ou alcoxy ayant de 1 à 6 atomes de carbone inclus.

E. - de 0 à 2 parties, de préférence de 0,02 à 2 parties d'un composé organosilicique portant au moins un groupe acroyloxyalkyle ou méthacroyloxyalkyle. Le gammaméthacryloxypropyltriméthoxysilane est le composé préféré.

Les gommes A. et les huiles D. sont commercialisées par les fabricants de silicone. Leurs procédés de fabrication sont bien connus. Les silices de pyrogénation utilisées, de préférence présentent une surface BET d'au moins 150 $m^2$/g et peuvent être éventuellement traitées avant leur incorporation, par exemple par l'hexaméthyldisiloxane, l'octaméthylcyclotétrasiloxane, les méthylchlorosilanes et le diméthylvinylchlorosilane.

Comme peroxyde C. on peut notamment utiliser le peroxyde de benzoyle, le diméthyl-2,5 ditertbutyl-2,5 peroxyhexane, le perbenzoate de tertbutyle, le peroxyde de 2,4-dichlorobenzoyle, le peroxyde de ditert-butyle, le peroxyde de dicumyle, le carbonate de tertbutylperoxyisopropyle.

Une compostion organopolysiloxane réticulant au platine et convenant plus particulièrement pour l'application visée comporte:

A. - 100 parties d'une gomme diméthylméthylvinylpolysiloxane bloquée à chacune de ses extrémités par un motif triméthylsiloxy présentant de 300 à 3000 ppm de radicaux vinyle ayant une viscosité comprise entre 1 000 000 et 50 000 000 de mPa.s à 25°C, jusqu'à 40 % molaire des radicaux méthyle pouvant être remplacés par un radical choisi parmi les radicaux phényle et trifluoro-3, 3, 3 propyle.

B. - 10 à 60 parties d'une silice renforçante choisie parmi les silices de précipitation et les silices de pyrogénation.

C. - 0,1 à 5 parties d'une huile méthylhydrogénosiloxane sensiblement linéaire, bloquée à chacune de ces extrémités par un motif triméthylsiloxy, comportant dans sa chaîne essentiellement des motifs méthylhydrogénosiloxy et de viscosité comprise entre 1 et 300 mPa.s à 25°C.

D. - Une quantité catalytiquement efficace (généralement comprise entre 10 et 10 000 ppm calculés en poids de métal) d'un catalyseur au platine.

E. - Eventuellement une quantité efficace d'un inhibiteur de l'action catalytique du platine à froid, cette quantité étant insuffisante pour inhiber l'action catalytique du platine à la température de vulcanisation.

F. - 0 à 15 parties d'un agent anti-structure qui est une huile diméthylpolysiloxane de viscosité inférieure à 5000 mPa.s à 25°C, formée d'un enchaînement de motifs de formule (CH₃)₂SiO et bloquée à chacune de ses extrémités par un radical hydroxyle ou alcoxy ayant de 1 à 6 atomes de carbone.

G. - de 0,1 à 5 parties d'un méthylvinylcyclopolysiloxane.

Les gommes A. et les produits C., D. et G. sont commercialisés par les fabricants de silicone.

Le catalyseur au platine D. peut être introduit tel quel ou sous forme de chlorure platinique au platineux ou d'acide chloroplatinique hexahydraté ou anhydre. D'autres sels ou complexes du platine sont bien entendu utilisables.

Les inhibiteurs E. du platine peuvent être par exemple un peroxyde organique, le benzotriazole, un silane aminé tel que le gammaaminoéthylamino-propyltriméthoxysilane, les alcools acétyléniques, etc...

Le composé G. utilisé est de préférence le méthylvinylcyclotétrasiloxane.

A ces deux types de compositions organopolysiloxanes préférées pour l'application visée on peut ajouter des oxydes ou hydroxydes de cérium et/ou d'un métal alcalino-terreux et de l'oxyde de titane associé éventuellement à un composé de platine qui, en plus de son action catalytique dans le cas de la présence d'un méthylhydrogénosiloxane améliore la tenue à la flamme de l'élastomère. L'addition de ces différents additifs est décrite dans les brevets américains US-A-3 514 424, 3 635 874, 3 711 520 et 3 821 140.

Les exemples suivants illustrent l'invention sans en limiter la portée.

- *Exemple 1:*

On mélange intimement à l'aide d'un malaxeur les ingrédients suivants:

- 93 parties d'une gomme diméthylpolysiloxane bloquée à chacune de ses deux extrémités par un motif diméthylvinylsiloxy de viscosité à 25°C 10 000 000 mPa.s ayant une teneur en radicaux vinyle de 120 ppm.

- 7 parties d'une gomme diméthylméthylvinyl-polysiloxane bloquée à chacune de ses deux extrémités par un motif triméthylsiloxy contenant 2 % en poids de radicaux vinyle et présentant une viscosité à 25°C de 400 000 mPa.s.

- 1 partie d'une huile diméthylpolysiloxane de viscosité 50 mPa.s à 25°C bloquée à chacune de ses deux extrémités par un radical hydroxyle lié à l'atome de silicium terminal.

- 0,1 partie de gammaméthacryloxyporpyltriméthoxysilane.

- 30 parties d'une silice de pyrogénation Aérosil 300® de surface BET 300 m²/g préalablement traitée par de l'octaméthylcyclotetrasiloxane.

Le malaxage est arrêté 30 minutes après la fin de l'introduction de la silice. On enlève du malaxeur la composition homogène venant d'être préparée, on la transfère sur un mélangeur à deux cylindres et on lui incorpore, à l'aide de ce mélangeur, une partie de peroxyde de dichloro-2,4 benzoyle pour 100 parties du mélange des deux gommes vinylées.

Le mélange homogène obtenu est introduit dans une extrudeuse horizontale et dont le diamètre de l'orifice de la filière est de 0,7 mm avec une vitesse d'extrusion de 30 m/mn. Le fil obtenu est recouvert de talc en continu par passage à l'intérieur d'un cylindre ajouré tournant dans un bac à talc, avant de passer dans le four de vulcanisation. A la sortie du cylindre talqueur le fil est posé sur une bande métallique transporteuse sans fin tournant à la vitesse de 30 m/mn, cette bande traversant une enceinte de 5 m de longueur chauffée par un rayonnement infra-rouge à une température moyenne de 340°C. A la sortie du four, le fil est bobiné régulièrement sur un tambour perforé à l'aide d'un système de trancardage. Ce tambour a un diamètre de 80 mm et une longueur de 40 cm et tournant avec une vitesse périphérique de 30 m/mn. L'épaisseur finale du fil enroulé ne dépasse pas une hauteur radiale de 2 cm.

La recuisson du fil est faite directement avec ce tambour enrouleur à une température de 200°C pendant une durée de 4 heures, dans un four à ventilation forcée.

Le fil ainsi obtenu présente un allongement à la rupture de 650 % et une résistance kilométrique à la rupture de 1,35.

A l'aide du fil ainsi obtenu on tricote un filet dont les mailles on 1 cm de côté dans lequel on place un rôti de dindonneau désossé de 2 kg. Après cuisson pendant 1 heure 30 mn à 250°C on constate que le fil silicone est intact, non coloré, n'adhère pas à la viande et a conservé son élasticité.

- *Exemple 2:*

La composition se présente en deux parties A et B que l'on mélange extemporanément lors de l'emploi à l'aide d'un mélangeur à deux cylindres: les parties A et B sont réalisées à partir du même mélange maître M.M.

- *Préparation du M.M:*

On mélange dans un malaxeur:

- 100 parties d'une gomme diméthylméthylvinyl-polysiloxane bloquée à chacune de ses deux extrémités par un motif triméthylsiloxy ayant une teneur en vinyle de 720 ppm, de viscosité 10 000 000 de mPa.s à 25°C.

- 1,4 parties d'une huile diméthylpolysiloxane de viscosité 50 mPa.s à 25°C bloquée à chacune de ses deux extrémités par un radical hydroxyle lié à l'atome de silicium terminal.

- 45 parties d'une silice de pyrogénation Aérosil

300® de surface BET 300 m²/g préalablement traitée par de l'octaméthylcyclotétrasiloxane.

Le malaxage est arrêté 30 minutes après l'introduction de la silice.

- *Préparation de la partie A* par malaxage dans un malaxeur de:
- 100 parties de M.M.
- 0,3 partie de méthylvinylcyclotétrasiloxane.
- 0,6 partie d'un empâtage préparé à partir d'Aérosil 300® , d'isopropanol et d'acide chloroplatinique contenant 0,2 % de platine métal.

- *Préparation de la partie B* par mélange dans un malaxeur de:
- 100 parties de M.M.
- 1 partie de méthylhydrogénopolysiloxane linéaire de viscosité 45 mPa.s à 25°C, bloquée à chacune de ses deux extrémités par un motif triméthylsiloxy et comportant dans sa chaîne essentiellement des motifs méthylhydrogénosiloxy.

Après mélange, en parties égales (50/50) des parties A et B, on file sans étirer la composition selon le procédé et à l'aide de l'appareillage décrit à l'exemple 1 sauf que l'orifice de la filière est de 0,5 mm, la vitesse d'extrusion est de 40 m/mn et la température moyenne du four est de 380°C.

Le fil est également recuit à une température de 200°C pendant une durée de 4 heures.

Le fil ainsi obtenu présente un allongement à la rupture de 550 % et une résistance kilométrique de 1,45.

A l'aide du fil ainsi obtenu on tricote un filet, dont les mailles ont 1,5 cm de côté, dans lequel on place un rôti de veau de 3 kg, de 15 cm de diamètre environ.

Après cuisson pendant deux heures à environ 240°C, on constate que le fil silicone est intact, incolore, n'adhère pas à la viande et a conservé son élasticité.

## Revendications

1. Procédé pour emballer un produit alimentaire à cuire selon lequel on emballe le produit par un lien, caractérisé en ce que la matière constitutive du lien est un éslstomère silicone provenant de la vulcanisation à chaud d'une composition organo-polysiloxane comportant au moins une gomme diorganopolysiloxane dont les radicaux organiques sont choisis parmi les radicaux méthyle et vinyle et éventuellement des radicaux phényle et trifluoro-3, 3, 3 propyle, une silice de pyrogénation et/ou une silice de précipitation et un système réticulant choisi parmi un peroxyde organique et l'association d'un hydrogénométhylpolysiloxane et d'une quantité catalytiquement efficace d'un catalyseur de la famille du platine.

2. Procédé selon la revendication 1, caractérisé en ce que le lien a la forme d'une bande découpée.

3. Procédé selon la revendication 1, caractérisé en ce que le lien a la forme d'un fil ou d'un brin.

4. Procédé selon la revendication 3, caractérisé en ce que le fil ou le brin présente une résistance kilométrique supérieure à 1, 2 et un allongement à la rupture supérieur à 250 %.

5. Procédé selon la revendication 3 ou 4, caractérisé en ce que le fil est formé de plusieurs brins.

6. Procédé selon la revendication 6, caractérisé en ce que la composition organopolysiloxane comporte:
A. - 100 parties d'un mélange de deux gommes méthylpolysiloxane vinylées formé de:
1) - 80 à 95 parties d'une gomme diméthylpolysiloxane bloquée à chacune de ses extrémités par un motif diméthylvinylsiloxy et de viscosité comprise entre 1 000 000 et 50 000 000 de mPa.s à 25°C, jusqu'à 40 % molaire des radicaux méthyle pouvant être remplacés par un radical choisi parmi les radicaux trifluoro-3, 3, 3 propyle et phényle.
2) - 20 à 5 parties d'une gomme diméthylméthylvinylpolysiloxane bloquée à chacune de ses extrémités par un motif triméthylsiloxy, présentant une viscosité comprise entre 100 000 et 1 000 000 de mPa.s à 25°C, jusqu'à 40 % molaire des radicaux méthyle pouvant être remplacés par des radicaux choisis parmi les radicaux phényle et trifluoro-3, 3, 3 propyle.
B. - 10 à 60 parties d'une silice renforçante choisie parmi les silices de précipitation et les silices de pyrogénation.
C. - 0,1 à 5 parties d'un peroxyde organique.
D. - 0 à 10 parties d'un agent anti-structure qui est une huile diméthylpolysiloxane de viscosité inférieure à 5 000 mPa.s à 25°C, formée d'un enchaînement de motifs de formule $(CH_3)_2SiO$ et bloquée à chacune de ses extrémités par un radical hydroxyle ou alcoxy ayant de 1 à 6 atomes de carbone inclus.
E. - 0 à 2 parties d'un composé organosilicique portant au moins un groupe acroyloxyalkyle ou méthacroyloxyalkyle.

7. Procédé selon la revendication 6, caractérisé en ce que la composition organopolysiloxane comporte:
A. - 100 parties d'une gomme diméthylméthylvinylpolysiloxane bloquée à chacune de ses extrémités par un motif triméthylsiloxy présentant de 300 à 3000 ppm de radicaux vinyle ayant une viscosité comprise entre 1 000 000 et 50 000 000 de mPa.s à 25°C, jusqu'à 40 % molaire des radicaux méthyle pouvant être remplacés par un radical choisi parmi les radicaux phényle et trifluoro-3, 3, 3 propyle.
B. - 10 à 60 parties d'une silice renforçante choisie parmi les silices de précipitation et les silices de pyrogénation.
C. - 0,1 à 5 parties d'une huile méthylhydrogénosiloxane sensiblement linéaire, bloquée à chacune de ses extrémités par un motif triméthylsiloxy, comportant dans sa chaîne essentiellement des motifs méthylhydrogénosiloxy et de viscosité comprise entre 1 et 300 mPa.s à 25°C.
D. - Une quantité catalytiquement efficace (généralement comprise entre 10 et 10 000 ppm) d'un catalyseur au platine.
E. - Eventuellement une quantité efficace d'un inhibiteur de l'action catalytique du platine à froid, cette quantité étant insuffisante pour inhiber l'action catalytique du platine à la température de vulcanisation.
F. - 0 à 15 parties d'un agent anti-structure qui est une huile diméthylpolysiloxane de viscosité inférieure à 5000 mPa.s à 25°C, formée d'un enchaînement de motifs de formule $(CH_3)_2SiO$ et bloquée à chacune de ses extrémités par un radical hydroxyle ou alcoxy ayant de 1 à 6 atomes de carbone.

G. - de 0,1 à 5 parties d'un méthylvinylcyclopolysiloxane.

## Claims

1. Process for wrapping an alimentary product to be cooked, according to which the product is wrapped by a ligature, characterized in that the constituent material of the ligature is a silicone elastomer originating from the hot vulcanization of an organopolysiloxane composition comprising at least one diorganopolysiloxane resin in which the organic radicals are chosen from methyl and vinyl radicals and, if desired, phenyl and 3, 3, 3-trifluoropropyl radicals, a pyrogenic silica and/or a precipitated silica and a crosslinking system chosen from an organic peroxide and the combination of a hydromethylpolysiloxane and of a catalytically effective quantity of a catalyst of the platinum group.

2. Process according to Claim 1, characterized in that the ligature is in the form of a slit tape.

3. Process according to Claim 1, characterized in that the ligature is in the form of a yarn or of a strand.

4. Process according to Claim 3, characterized in that the yarn or the strand has a strength per kilometre higher than 1.2 and an elongation at break higher than 250 %.

5. Process according to Claim 3 or 4, characterized in that the yarn is made up of a number of strands.

6. Process according to Claim 6, characterized in that the organopolysiloxane composition comprises:

A. - 100 parts of a mixture of two vinylated methylpolysiloxane resins which is made up of:

1) - 80 to 95 parts of a dimethylpolysiloxane resin blocked by a dimethylvinylsiloxy unit at each of its ends and with a viscosity of between 1 000 000 and 50 000 000 mPa.s at 25°C, it being possible for up to 40 mol % of the methyl radicals to be replaced by a radical chosen from 3, 3, 3-trifluoropropyl and phenyl radicals,

2) - 20 to 5 parts of a dimethylmethylvinylpolysiloxane resin blocked by a trimethylsiloxy unit at each of its ends, exhibiting a viscosity of between 100 000 and 1 000 000 mPa.s at 25°C, it being possible for up to 40 mol % of the methyl radicals to be replaced by radicals chosen from phenyl and 3, 3, 3-trifluoropropyl radicals,

B. - 10 to 60 parts of a reinforcing silica chosen from precipitated silicas and pyrogenic silicas,

C. - 0.1 to 5 parts of an organic peroxide,

D. - 0 to 10 parts of an antistructure agent which is a dimethylpolysiloxane oil with a viscosity below 5 000 mPa.s at 25°C, consisting of a chain sequence of units of formula $(CH_3)_2SiO$ and blocked at each of its ends by a hydroxyl or alkoxy radical containing from 1 to 6 carbon atoms inclusive,

E. - 0 to 2 parts of an organosilicon compound bearing at least one acryloyloxyalkyl or methacryloyloxyalkyl group.

7. Process according to Claim 6, characterized in that the organopolysiloxane composition comprises:

A. - 100 parts of a dimethylmethylvinylpolysiloxane resin blocked by a trimethylsiloxy unit at each of its ends, containing from 300 to 3 000 ppm of vinyl radicals, which has a viscosity of between 1 000 000 and 50 000 000 mPa.s at 25°C, it being possible for up to 40 mol % of the methyl radicals to be replaced by a radical chosen from phenyl and 3, 3, 3-trifluoropropyl radicals,

B. - 10 to 60 parts of a reinforcing silica chosen from precipitated silicas and pyrogenic silicas,

C. - 0.1 to 5 parts of a substantially linear methylhydrosiloxane oil blocked by a trimethylsiloxy unit at each of its ends, comprising essentially methyl hydrosiloxy units in its chain and with a viscosity of between 1 and 300 mPa.s at 25°C,

D. - a catalytically effective quantity (generally between 10 and 10 000 ppm) of a platinum catalyst,

E. - optionally an effective quantity of an inhibitor of the catalytic action of platinum when cold, this quantity being insufficient to inhibit the catalytic action of platinum at the temperature of vulcanization,

F. - 0 to 15 parts of an antistructure agent which is a dimethylpolysiloxane oil with a viscosity below 5 000 mPa.s at 25°C, consisting of a chain sequence of units of formula $(CH_3)_2SiO$ and blocked at each of its ends by a hydroxyl or alkoxy radical containing from 1 to 6 carbon atoms,

G. - from 0.1 to 5 parts of a methylvinylcyclopolysiloxane.

## Patentansprüche

1. Verfahren zum Einpacken eines zu kochenden oder zu bratenden Nahrungsmittelprodukts, gemäß dem das Produkt mit einem Band oder Verschnürung eingewickelt wird, dadurch gekennzeichnet, daß das wesentliche Material der Verschnürung ein Siliconelastomeres ist, stammend von der Heißvulkanisation einer Orangopolysiloxanzusammensetzung, die mindestens ein Diorganopolysiloxangummi, dessen organische Reste ausgewählt sind unter den Methyl- und Vinylresten und gegebenenfalls Phenyl- und 3, 3, 3-Trifluorpropylresten, ein pyrogenes Siliciumdioxid und/oder Fällungssiliciumdioxid und ein vernetzendes System, ausgewählt unter einem organischen Peroxid und der Assoziation eines Hydrogenmethylpolysiloxans, und einer katalytisch wirksamen Menge eines Katalysators aus der Familie des Platins.

2. Verfahren gemäß Anspruch 1, dadurch gekennzeichnet, daß die Bindung oder Verschnürung die Form eines geschnittenen Bandes hat.

3. Verfahren gemäß Anspruch 1, dadurch gekennzeichnet, daß die Bindung die Form eines Fadens oder einer Faser hat.

4. Verfahren gemäß Anspruch 3, dadurch gekennzeichnet, daß der Faden oder die Faser eine Reißkilometerlänge oberhalb 1,2 und eine Bruchdehnung oberhalb 250 % hat.

5. Verfahren gemäß Anspruch 3 oder 4, dadurch gekennzeichnet, daß der Faden aus mehreren Fasern gebildet ist.

6. Verfahren gemäß Anspruch 1, dadurch gekennzeichnet, daß die Organopolysiloxanzusammensetzung enthält:

A. - 100 Teile eines Gemisches von zwei vinylierten Methylpolysiloxangummen, gebildet aus:

1) - 80 bis 95 Teilen eines Dimethylpolysiloxangummis, das an jedem seiner äußeren Enden durch eine Dimethylvinylsiloxygruppe blockiert ist und eine Viskosität zwischen 1 000 000 und 50 000 000 mPa.s bei 25°C hat, wobei bis zu 40 Mol-% der Methylreste durch einen Rest, ausgewählt unter dem 3, 3, 3-Trifluorpropylrest und Phenylrest, ersetzt werden kann,

2) - 20 bis 5 Teile eines Dimethylmethylvinylpolysiloxangummis, das an jedem seiner äußeren Enden durch eine Trimethylsiloxygruppe blockiert ist und eine Viskosität zwischen 100 000 und 1 000 000 mPa.s bei 25°C hat, wobei bis zu 40 Mol-% der Methylreste durch Reste, ausgewählt unter den Phenyl- und 3, 3, 3-Trifluorpropylresten, ersetzt werden kann,

B. - 10 bis 60 Teile eines verstärkenden Siliciumdioxids, ausgewählt unter den Fällungssiliciumdioxiden und den pyrogenen Siliciumdioxiden,

C. - 0,1 bis 5 Teile eines organischen Peroxids,

D. - 0 bis 10 Teile eines Antistrukturmittels, welches ein Dimethylpolysiloxanöl mit einer Viskosität unterhalb 5000 mPa.s bei 25°C hat, gebildet durch Verkettung von Gruppierungen der Formel $(CH_3)_2SiO$ und blockiert an jedem seiner äußeren Enden durch einen Hydroxyl- oder Alkoxyrest mit 1 bis 6 Kohlenstoffatomen einschließlich,

E. - 0 bis 2 Teile einer Organosiliciumverbindung mit wenigstens einer Acroyloxyalkyl- oder Methacroyloxyalkylgruppe.

7. Verfahren gemäß Anspruch 6, dadurch gekennzeichnet, daß die Organopolysiloxanzusammensetzung enthält:

A. - 100 Teile eines Dimethylmethylvinylpolysiloxangummis, das an jedem seiner äußeren Enden durch eine Trimethylsiloxygruppe mit 300 bis 3000 ppm Vinylresten blockiert ist und eine Viskosität zwischen 1 000 000 und 50 000 000 mPa.s bei 25°C hat, wobei bis zu 40 Mol-% der Methylreste durch einen Rest, ausgewählt unter den Phenyl- und 3, 3, 3-Trifluorpropylresten, ersetzt werden kann,

B. - 10 bis 60 Teile eines Verstärkungssiliciumdioxids, ausgewählt unter den Fällungssiliciumdioxiden und den pyrogenen Siliciumdioxiden,

C. - 0,1 bis 5 Teile eines im wesentlichen linearen Methylhydrogensiloxanöls, das an jedem seiner äußeren Enden durch eine Trimethylsiloxygruppe blockiert ist und in seiner Kette im wesentlichen Methylhydrogensiloxygruppen enthält, mit einer Viskosität zwischen 1 und 300 mPa.s bei 25°C,

D. - eine katalytisch wirksame Menge (im allgemeinen zwischen 10 und 10 000 ppm) eines Platinkatalysators,

E. - gegebenenfalls eine wirksame Menge eines Inhibitors für die katalytische Wirkung des Platins in der Kälte, wobei diese Menge nicht ausreichend ist, die katalytische Wirkung des Platins bei der Vulkanisationstemperatur zu verhindern,

F. - 0 bis 15 Teile eines Antistrukturmittels, welches ein Dimethylpolysiloxanöl der Viskosität unterhalb 5000 mPa.s bei 25°C ist, gebildet durch Verkettung von Gruppierungen der Formel $(CH_3)_2SiO$ und blockiert an jedem seiner äußeren Enden durch einen Hydroxyl- oder Alkoxyrest mit 1 bis 6 Kohlenstoffatomen,

G. - 0,1 bis 5 Teile eines Methylvinylcyclopolysiloxans.